# EUROPÄISCHE PATENTSCHRIFT

(11) **EP 0 393 802 B1**
(45) Veröffentlichungstag und Bekanntmachung des Hinweises auf die Patenterteilung: **02.06.1993**
(21) Anmeldenummer: 90250096.6
(22) Anmeldetag: 11.04.1990
(51) Int. Cl.: F16L 15/00

(54) **Verfahren zur Vorbehandlung der Verbindungselemente einer gasdichten Rohrverbindung**
Connection element pretreatment process for a gastight pipe connection
Procédé de traitement préparatoire d'éléments de connexion d'un raccord de tuyaux étanche au gaz

(30) Priorität: 19.04.1989 DE 3913314
(43) Veröffentlichungstag der Anmeldung: 24.10.1990
(73) Patentinhaber: MANNESMANN Aktiengesellschaft, 40027 Düsseldorf (DE)
(72) Erfinder: Krings, Reiner, Dr.-Ing., D-4000 Düsseldorf 31 (DE); Schulte, Willy., Dipl.-Ing., D-4018 Langenfeld (DE)
(74) Vertreter: Presting, Hans-Joachim, Dipl.-Ing.

(56) Entgegenhaltungen:
- EP-A- 0 157 587
- EP-A- 0 264 446
- GB-A- 2 104 919
- US-A- 4 692 988

## Beschreibung

Die Erfindung betrifft ein Verfahren zur Vorbehandlung der Verbindungselemente einer gasdichten Rohrverbindung gemäß dem Gattungsbegriff des Hauptanspruches.

Die Rohrverbindung eines aus miteinander verschraubbaren Gewinderohren bestehenden Stranges für den Einsatz in der Erdöl- und Erdgasindustrie hat zum einen die Aufgabe die Stranglast aufzunehmen und zum anderen die Dichtheit der Verbindung zu sichern. Zur Erfüllung dieser Aufgaben weist der Gewindeabschnitt der Rohrenden und der Muffe z.B. ein konisches API-Gewinde mit einer entsprechenden Uberdeckung auf. Bedingt durch die Gewindeüberdeckung entstehen beim Verschrauben hohe Oberflächenpressungen. Zur Beherrschung dieser großen Belastung wurden Oberflächenbeschichtungen und Fette entwickelt, die ein Verschrauben ohne Fressen ermöglicht. Diese Gewindefette sind schmierfähige Pasten mit einem hohen Anteil an feinverteilten Feststoffpartikeln, wie z.B. Graphit, Metalle oder Teflon. Außer einem problemlosen Verschrauben unterstützen diese Fette die hydraulische Dichtheit der Verbindung. (Erdöl, Erdpas 1983, 5. 293-296).

Bei der von verschiedenen Herstellern entwickelten gasdichten Verbindung wird die Dichtheit der Verbindung durch eine Uberdeckung im metallischen Dichtsitz erzielt. Die Stoßschultern dienen als Einschraubbegrenzung und sie sorgen dafür, daß mit steigender Stranglast der metallische Dichtsitz aktiviert bleibt. Das konische Gewinde braucht demzufolge keine Dichtfunktion zu übernehmen und seine Aufgabe besteht im Gegensatz zum API-Gewinde nur in der Übertragung der Stranglast.

In der GB-A-21 04 919 ist eine Rohrverbindung mit einem metallischen Dichtsitz und einer speziellen Oberflächenbeschichtung offenbart. Sowohl das Muffenelement als auch die miteinander zu verbindenden Rohre aus einem hochchromhaltigen Stahl (> 10 % Cr) werden mindestens im Dichtsitzbereich nach dem Entfetten mit einem aus zwei Schichten bestehenden Überzug versehen. Dazu wird zuerst mittels einer Naßelektrolyse ein Metall oder eine Legierung aus der Gruppe Fe, Ni, Zn, Co, Cu, Mn oder Cr aufgebracht und darüber eine elektrolytisch abgeschiedene Schicht eines Metalls oder Legierung aus der Gruppe Fe, Cu, Zn, Cr oder Ni gelegt. Durch diese Oberflächenbehandlung soll ein Fressen auch bei Mehrfachverschraubung verhindert werden. Die Dichtheit der Verbindung wurde entsprechend der API-Spezifikation (RP-37) überprüft. Das bei der Mehrfachverschraubung verwendete Schmiermittel ist nicht offenbart

Um gasdichte Verbindungen im Gewinde- und Dichtsitzbereich zuverlässig verschrauben zu können, werden auch bei diesen Rohrverbindungen bislang Oberflächenbeschichtungen und Feststoffschmierpasten verwendet, um Fresserscheinungen auszuschalten und Mehrfachverschraubungen zu ermöglichen. Der große Nachteil bei Verwendung von Feststoffschmierpasten bzw. Verschraubfetten bei gasdichten Verbindungen mit konischen Gewindeabschnitten ist, daß sie im Gewindebereich eine hohe temporäre Dichtwirkung erzeugen. Wird eine gasdichte Verbindung nach dem Verschrauben auf Dichtheit getestet, so gibt das Testergebnis aufgrund der temporären Dichtheit des Gewindes keine gesicherte Aussage über die Dichtheit des Systems, obwohl die eingesetzten Meßverfahren in der Lage sind, Leckageraten von weniger als 1 Liter pro Jahr zu detektieren und die Testdrücke im Bereich der Mindest-Innendruckfestigkeit der Verbindungen liegen. Die beim Einbau im Feld zur Verfügung stehende Prüfzeit (1 - 3 Minuten) reicht bei weitem nicht aus, die durch das Verschraubfett erzeugte temporäre Dichtung sicher zu überwinden. Wie entsprechende Versuche gezeigt haben, wird deshalb bei Verwendung von Gewindefetten sehr oft eine Gasdichtheit nur vorgetäuscht. Die Versuche haben weiterhin gezeigt, daß mit steigendem Rohrdurchmesser aufgrund des größeren Gewindewiderstandes bedingt durch Durchmesser und Gewindelänge die Pseudodichtheit zunimmt.

In der Vergangenheit sind nun eine Vielzahl von Vorschlägen unterbreitet worden, um dieses Problem zu überwinden.

Ein erster Vorschlag geht dahin, die Menge des aufgetragenen API-Gewindefettes zu variieren, d. h. sehr dünne Fettschichten aufzutragen. Dieser Vorschlag ist am Problem der Reproduzierbarkeit des Auftragens der dünnen Fettmengenschicht gescheitert, da örtliche Unterschreitungen der Mindestfettschicht zu Fresserscheinung führten. Ein weiterer Vorschlag zielt in Richtung der Erniedrigung der Viskosität des Gewindefettes durch Beimischung von Lösungsmitteln. Dabei stellte sich heraus, daß die Lösungsmittel nicht so schnell, wie erhofft, verdampfen und bei zu großer Verdünnung das Fett vom Bereich des Gewindeendes herunterläuft und es dort zu Fresserscheinungen kommt.

Bei einem weiteren Vorschlag wird die Muffe mit Molywell, einer Verschraubsubstanz mit nur einem geringen Anteil an Lösungsmitteln behandelt. Unmittelbar vor der Verschraubung wird der Gewindebereich zusätzlich mit Teflon besprüht. Nachteilig bei diesem Vorschlag ist der durch das Molywell bedingte höhere Reibwert in den Gewindegängen, so daß vom Gesamtverschraubmoment nur ein reduzierter Anteil für die Aktivierung des Dichtsitzes durch die Stoßschultern verbleibt. Die Möglichkeit, ein höheres Verschraubmoment zuzulassen, bedeutet die Notwendigkeit der Ermittlung eines Korrekturfaktors, der für alle Belastungsarten und Gewindearten umständlich zu ermitteln ist. Außerdem ist der genannte Vorschlag recht aufwendig, da die Vorbehandlung vor der Verschraubung die Inanspruchnahme einer Spezialfirma erforderlich macht.

Ein weiterer sehr aufwendiger Vorschlag betrifft das Ionenimplantieren. Bei diesem Verfahren dringen ionisierte Metalle, z. B. Palladium, Silber, Chrom, Gold in die Muffenoberfläche. Diese teure Vorbehandlung ist nur in einer Spezialfirma möglich und bedeutet für den Verwender eine aufwendige Logistik und eine Abhängigkeit möglicherweise von nur einem Lieferanten.

Aufgabe der Erfindung ist es, ein verbessertes Verfahren zur Vorbehandlung der Verbindungselemente einer gasdichten Rohrverbindung mit metallischem Dichtsitz und Stoßschulter anzugeben, das zum einen kostengünstig ist und eine einfache Handhabung beim Verschrauben gestattet und mit dem ein Fressen auch bei Mehrfachverschraubung verhindert wird und die Dichtheit der verschraubten Verbindung reproduzierbar und aussagefähig in kürzerer Zeit als bisher überprüft werden kann.

Diese Aufgabe wird durch die kennzeichnenden Merkmale des Hauptanspruches gelöst. Vorteilhafte Weiterbildungen sind in den Unteransprüchen festgelegt.

Das erfindungsgemäße Verfahren zeichnet sich dadurch aus, daß die Vorbehandlung der Verbindungselemente einfach und kostengünstig ist. Bisher war es üblich, sowohl das als Muffe ausgebildete Verbindungselement als auch den Zapfen mit einer Zink-Phosphatschicht zu überziehen, um die Anforderungen der API RP 37 im Hinblick auf Mehrfachverschraubungen zu erfüllen. Entsprechend dem neuen Vorschlag wird nur die Muffe vorbehandelt und der Zapfenteil bleibt blank. Der sich daraus ergebende Kostenvorteil liegt unmittelbar auf der Hand. Der vorgeschlagene Überzug besteht vorzugsweise aus einer Mangan-Phosphatschicht, die mittels einer Kombination verschiedener Bäder chemisch auf der Oberfläche der Muffe abgeschieden wird. Im Vergleich zur bisher üblichen Zink-Phosphatschicht ist die Kristallstruktur der Mangan-Phosphatschicht sehr hart und weist ein feines Korn auf. In Verbindung mit einer starken Bindungshaftung mit der Metalloberfläche und einer Kompaktstruktur ist diese Schicht sehr widerstandsfähig gegen kombinierte Belastung wie Flächenpressung und Scherkraft. Außerdem ist die aufgebaute Schicht sehr gleichmässig in der Dicke und verschleißfest im Hinblick auf Mehrfachverschraubungen.

Alternativ zur Mangan-Phosphatschicht kann die Muffe auch mit elektrolytisch abgeschiedenen Zinn oder Kupfer überzogen werden. Diese Alternative, mit denen vergleichbare Mehrfachverschraubungen ohne Freßerscheinungen erzielbar sind, bietet sich vor allen Dingen für hochlegierte Werkstoffe, wie z. B. ferritische, ferritisch-austenitische und austenitische Stähle an. Bei diesen Stählen kann wegen der Passivierungsneigung der Elemente Chrom und Nickel keine Mangan-Phosphatschicht aufgebaut werden.

Ein weiterer Vorteil des erfindungsgemäßen Verfahrens ist darin zu sehen, daß statt des bisher üblichen Gewindefettes zum Verschrauben ein Öl als Schmiermittel verwendet wird. Das Auftragen des Öles auf dem Dichtsitz und Gewindebereich von Zapfen- und Muffenelement durch Pinseln oder Sprühen ist denkbar einfach und erfordert keine Spezialkenntnisse der Bohrmannschaft und es sind zusätzlich keine teuren Spezialmittel wie z. B. Teflon erforderlich. Die Viskosität des Öles liegt in einem Bereich von < 350 mm²/sec bei 40 Grad Celsius, vorzugsweise bei etwa 220 mm²/sec bei 40 Grad Celsius bzw. 20 mm²/sec bei 100 Grad Celsius. Diese Viskosität ist ausreichend, damit bei extremen Temperaturverhältnissen in heißen Klimazonen das Öl nicht herabläuft und damit Freßerscheinungen am Gewindeende auftreten können. Die Verwendung eines Öles führt nicht zu einer temporären Dichtwirkung im Gewinde, so daß das Prüfgas, das bei dem Gasdichtheitstest verwendet wird, in kurzer Zeit die Gewindegänge durchströmt und detektiert wird, falls der metallische Dichtsitz undicht sein sollte. Da die Detektierung kurzzeitig und reproduzierbar erfolgt, ist die volle Ausschöpfung der bisher üblichen Prüfhaltezeit von 3 min. nicht erforderlich. Mit der erfindungsgemäßen Vorbehandlung kann die Prüfhaltezeit zumindestens halbiert werden, so daß die Taktzeit auf dem Bohrturm sich entsprechend reduziert. Mit zunehmender Bohrtiefe nimmt die Bedeutung des vorher durchgeführten Gasdichtheitstestes zu, da der Aufwand und die Kosten extrem ansteigen, falls aus einer Tiefe von 3000 und mehr der Strang wegen Undichtheit einer am Anfang liegenden Verbindung wieder hochgehoben werden muß. Der zusätzliche Prüfaufwand ist aber nur dann sinnvoll und zu vertreten, wenn das Prüfergebnis in kurzer Zeit zu erhalten ist, so daß die Taktzeit auf dem Bohrturm nicht unnötig verlängert wird und das Ergebnis reproduzierbar aussagefähig ist und keine Pseudodichtheiten vorgetäuscht werden.

Anhand der Zeichnung wird das erfindungsgemäße Verfahren näher erläutert. Es zeigen:
- Figur 1a: einen Teillängsschnitt durch eine vorbehandelte Muffe
- Figur 1b: einen Teillängsschnitt der unbehandelten Zapfen
- Figur 1c: einen Teillängsschnitt sowie eine Ansicht der Rohrverbindung im verschraubten Zustand
- Figur 2: einen Längsschnitt durch die Anordnung für den Gasdichtheitstest

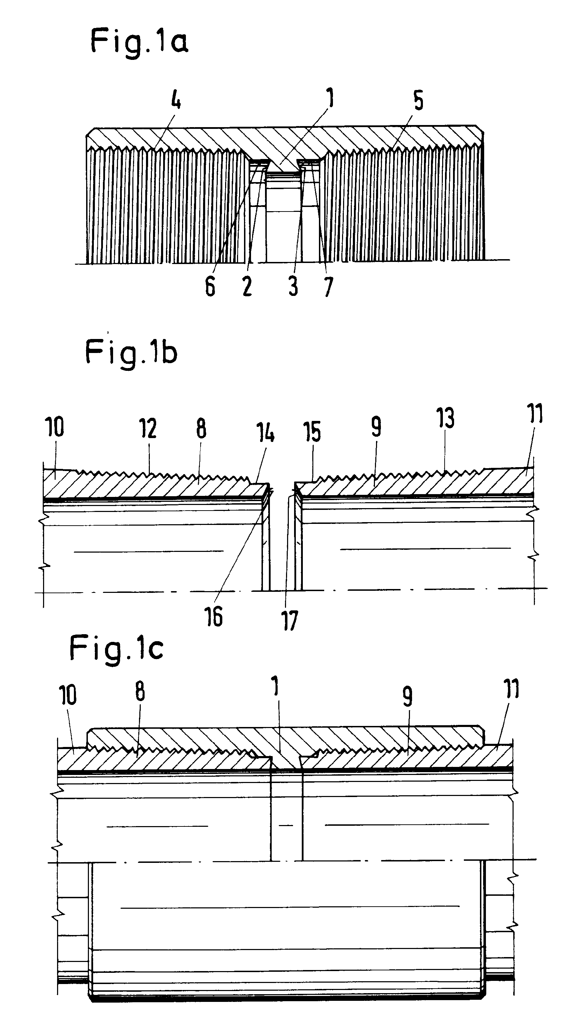

In Figur 1a ist in einem Teillängsschnitt die vorbehandelte Muffe 1 dargestellt. Nach der hier nicht gezeigten chemischen Vorbehandlung sind der Dichtsitzbereich 6,7, beide Stoßschultern 2,3 sowie beide Gewindeabschnitte 4,5 mit einer Mangan-Phosphatschicht überzogen. Die als Zapfen 8,9 ausgebildeten Verbindungselemente der beiden zu verschraubenden Rohre 10,11 bleiben unbehandelt blank (Figur 1b). Jedes Zapfenelement 8,9 weist einen Gewindeabschnitt 12,13, eine Dichtsitzfläche 14,15 und eine Stoßschulter 16,17 auf. Vor dem Verschrauben werden sowohl die Muffe 1 als auch die Zapfen 8,9 vollständig gereinigt und anschließend alte Verbindungselemente mit Öl eingepinselt bzw. eingesprüht. Figur 1c zeigt die Rohrverbindung im verschraubten Zustand, wobei die Dichtflächen 14,15 der Zapfenelemente 8,9 zusammen mit den Dichtflächen 6,7 der Muffe 1 einen metallischen Dichtsitz bilden. Die Gewindeabschnitte 4,5,12,13 sind komplementär konisch zueinander ausgebildet.

Der gewählte Gewindetyp für die Gewindeabschnitte 4,5,12,13 ist für das erfindungsgemäße Verfahren von untergeordneter Bedeutung.

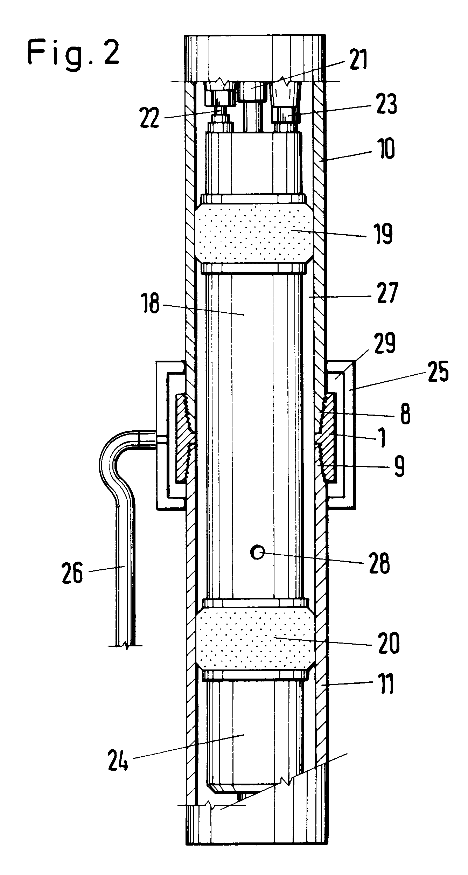

In Figur 2 ist in einem Längsschnitt die Anordnung für den Gasdichtheitstest dargestellt. Nach dem Verschrauben wird durch das in der Muffe 1 eingeschraubte Rohr 10 ein Prüfdorn 18 mit zwei im Abstand voneinander angeordneten Packerelementen 19,20 eingeführt. Der Prüfdorn 18 ist an seinem oberen Ende mit einer Haltestange 21 und einer Hydraulikleitung 22 für das Setzen der Packerelemente 19,20 und einer Prüfgasleitung 23 verbunden. Am unteren Ende des Prüfdornes 18 befindet sich eine Führung 24 aus Hartgummi. Um die Rohrverbindung wird ein geteiltes Mantelrohr 25 gelegt, das eine Anschlußleitung 26 aufweist, die mit dem hier nicht dargestellten Detektor, z. B. ein Gaschromatographen verbunden ist. Damit das zugeführte Prüfgas in den Ringraum 27, der gebildet wird durch das Restvolumen von Prüfdorn 18 und Bohrung der Rohre 10,11 einströmen kann, weist der Prüfdorn 18 mindestens eine oder mehrere Öffnungen 28 auf.

Das Prüfverfahren läuft nun in der Weise ab, daß der Ringraum 27 mittels des zugeführten Prüfgases unter Druck gesetzt wird, z. B. mit 125 bar, wobei die hydraulisch aufgeblasenen Packerelemente 19,20 für die erforderliche Dichtung nach oben und nach unten sorgen. Sollte die Rohrverbindung im Bereich des metallischen Dichtsitzes undicht sein, so würde das Prüfgas durch die miteinander verschraubten Gewindeabschnitte 4,5,12,13 (siehe Figur 1a + 1b) strömen und in den durch das Mantelrohr 25 und der äußeren Oberfläche der Rohrverbindung gebildeten Ringraum 29 gelangen. Von dort würde es über die Leitung 26 dem Detektor zugeführt werden, der dann eine entsprechende Anzeige auslösen würde.

## Patentansprüche

1. Verfahren zur Vorbehandlung der Verbindungselemente (1, 10, 11) aus Stahl einer gasdichten Rohrverbindung mit metallischem Dichtsitz (6, 7, 14, 15) und Stoßschulter (2, 3, 16, 17) zum mehrfachen Verschrauben von Gewindernhren (10, 11) für die Erdöl- und Erdgasindustrie bei dem der Dichtungs- (6, 7, 14, 15) und Gewindebereich (4, 5, 12, 13) der Verbindungselemente (1, 10, 11) zunächst oberflächenbehandelt und vor dem Verschrauben auf dem gereinigten Dichtungs- (6, 7, 14, 15) und Gewindebereich (4, 5, 12, 13) ein Schmiermittel aufgetragen wird
**dadurch gekennzeichnet,**
das nur das als Muffe (1) ausgebildete Verbindungselement innen mit einem Überzug versehen und vor dem Verschrauben Öl als Schmiermittel auf die Muffe (1) und auf das als blanket Zapfen (8, 9) ausgebildete Verbindungselement aufgetragen wird, wobei bei Verbindungselementen (1, 10, 11) aus C-Stahl der Überzug aus einer Mangan-Phosphatschicht und bei Verbindungselementen (1, 10, 11) aus hochlegierten Stählen der Überzug aus elektrolytisch abgeschiedenem Zinn oder Kupfer besteht.

2. Verfahren nach Anspruch 1,
**dadurch gekennzeichnet,**
daß das Öl ein Motorenöl ist.

3. Verfahren nach Anspruch 1,
**dadurch gekennzeichnet,**
daß das Öl ein Gleitbahnöl ist.

4. Verfahren nach den Ansprüchen 1 bis 3,
**dadurch gekennzeichnet,**
daß das Öl vor dem Verschrauben durch Pinseln aufgetragen wird.

5. Verfahren nach den Ansprüchen 1 bis 3,
**dadurch gekennzeichnet,**
daß das Öl vor dem Verschrauben aufgesprüht wird.

## Claims

1. A method for the pretreatment of the steel connecting elements (1, 10, 11) of a gas-tight pipe connection with a metallic sealing seat (6, 7, 14, 15) and impact shoulders (2, 3, 16, 17) for the repeated screw-connecting of threaded pipes (10, 11) for the petroleum and natural gas industry in which the sealing region (6, 7, 14, 15) and threaded region (4, 5, 12, 13) of the connecting elements (1, 10, 11) is first surface-treated and before screw-connecting a lubricant is applied to the cleaned sealing region (6, 7, 14, 15) and threaded region (4, 5, 12, 13), characterised in that only the connecting element which is designed as a bushing (1) is provided on the inside with a coating and before screw-connecting oil is applied as a lubricant to the bushing (1) and to the connecting element designed as a plain journal (8, 9), the coating consisting of a manganese-phosphate layer in the case of connecting elements (1, 10, 11) made of carbon steel and the coating consisting of electrolytically, deposited tin or copper in the case of connecting elements (1, 10, 11) made of high-alloy steels.

2. A method according to Claim 1, characterised in that the oil is an engine oil.

3. A method according to Claim 1, characterised in that the oil is a slideway oil.

4. A method according to Claims 1 to 3, characterised in that the oil is applied by brushes before screw-connecting .

5. A method according to Claims 1 to 3, characterised in that the oil is sprayed on before screw-connecting.

## Revendications

1. Procédé pour le prétraitement des éléments (1,10,11) en acier d'une liaison de tubes, étanche au gaz, comportant un siège étanche métallique (6,7,14,15) et des épaulements de contact (2,3,16,17) pour un vissage multiple de tubes filetés (10,11) pour l'industrie du pétrole et du gaz naturel, dans lequel procédé les zones d'étanchéité (6,7,14,15) et de filetage (4,5,12,13) des éléments de liaison (1,10,11) sont d'abord traitées superficiellement et, avant le vissage, un lubrifiant est déposé sur les zones d'étanchéité (6,7,14,15) et de filetage (4,5,12,13) nettoyées,
caractérisé en ce que seul l'élément de liaison réalisé en tant que manchon (1) est recouvert à l'intérieur d'un revêtement et, avant le vissage, de l'huile est déposée en tant que lubrifiant sur le manchon (1) et sur l'élément de liaison réalisé en tant que tourillon usiné (8,9), pour des éléments de liaison (1,10,11) en acier à carbone, le revêtement étant constitué d'une couche de phosphate de manganèse et, pour des éléments de liaison (1,10,11) en acier fortement allié, le revêtement étant réalisé en étain ou cuivre déposé par électrolyse.

2. Procédé selon la revendication 1, caractérisé en ce que l'huile est une huile de moteur.

3. Procédé selon la revendication 1, caractérisé en ce que l'huile est une huile pour surface de glissement.

4. Procédé selon les revendications 1 à 3, caractérisé en ce que l'huile est déposée à l'aide de pinceaux avant le vissage.

5. Procédé selon les revendications 1 à 3, caractérisé en ce que l'huile est déposée par pulvérisation avant le vissage.
